# EUROPEAN PATENT SPECIFICATION

(11) **EP 0 311 671 B1**
(45) Date of publication and mention of the grant of the patent: **01.09.1993**
(21) Application number: 88904048.1
(22) Date of filing: 30.03.1988
(51) Int. Cl.: G01R 31/28, G06F 11/00, G05B 15/02, G09F 7/06

(54) **IDENTITY INSERT FOR ELECTRONIC MODULES**
IDENTITÄTSEINSCHUB FÜR ELEKTRONISCHE MODULE
ELEMENT D'INSERTION D'IDENTITE POUR MODULES ELECTRONIQUES

(30) Priority: 13.04.1987 US 37756
(43) Date of publication of application: 19.04.1989
(73) Proprietor: THE FOXBORO COMPANY, Foxboro, MA 02035 (US)
(72) Inventor: TOBOL, Nathan, H., Wrentham, MA 02039 (US); Katz,Jonathan, deceased (US)
(74) Representative: Henkel, Feiler, Hänzel & Partner
(86) International application number: US8801079
(87) International publication number: WO8808138

(56) References cited:
- EP-A- 0 057 645
- CH-A- 379 344
- DD-A- 203 670
- GB-A- 2 132 802
- US-A- 3 863 931
- US-A- 4 468 612
- US-A- 4 578 773

## Description

The invention relates to a system of unique identity elements for external electrical determination of an object and to a method of determining the unique identity assigned to the object in such system.

Electronic networks may spread over great distances connecting many modules and other connection points. Proper identification of the devices and connections is then a troublesome aspect in assembly and testing of the network. In particular where there is a multiplicity of modules and connections, it is difficult, and time consuming to clearly identify where inputs are arriving from and where outputs should go. Currently, the problem is solved by associating a particular physical connection point, for example a slot in an equipment rack, with the required device or signal. The device is then confined to the single position, and replacement requires clearing the slot of the old device before a replacement device can be started.

Prior art document DD-A-203 670 discloses a device in which contacts are exposed, presenting the possibility of a catastrophic mis-identification in case the terminals become shorted or an electrical resistance develops across two terminals not intended to be connected. This problem is exacerbated by an exposed elongated center pin. Alternatively, exposed wire-wrap connections are notoriously subject to developing electrical resistance and open circuits, especially when subjected to vibration or corrosive atmosphere. This is especially important in industrial process control systems where the equipment is often located in unhardened areas subjected to corrosive and vibration.

Prior art document GB-A-2 132 802 describes a digital signal producing device in which a entire signature plug carries a specific set of symbols, so that only a limited number of signature plugs is available, a separate one of which must be manufactured for each signature.

Finally, prior art document US-A-4 578 773 discloses a circuit board status detection system in which an output is via a unique combination of printed circuit board edge connector patterns, and thus is much more restrictive in reconfigurability: PC boards have to be redesigned and newly manufactured in order to change a configuration.

It is an object of the present invention to support self configuration and verification, provide information for on line reconfiguration, allow modules to be installed in any available slot, provide an identification meaningful to the user, as opposed to confusable physical slot addressing, provide a basis for a configuration data base containing a list of variables, locations, and types for each network device, and allow the detection of common configuration errors, such as a mismatch between signal and input output module. A further object is to minimize the need for cable tags and to facilitate the replacement or relocation of input output modules. A still further object is to provide a module identifier useful for functional interaction with the associated device.

To solve this object the present invention provides a system and a method as specified in claim 1 or 11.

A module identifier electrically is readable by a processor, and preferrably visually readable and interchangeable by a user. One side of an individual identifier insert is embossed with a single alphanumeric character or other symbol readable by a viewer. The opposite side has an electric pin pattern corresponding by a code to the embossed character and readable by electronic means. A complex label may be created by interlocking several identifiers to form a module identifier as letters are assembled to spell a word. Thus the module identifier forms a label readable both by an operator and a processor. Module identifiers eliminate the need for physical location based addressing, such as a slot based addressing.

This invention can be more fully understood from the following detailed description when taken in conjunction with the accompanying drawings, in which:
FIG. 1 shows a perspective front view of an indicating insert,
FIG. 2 shows a perspective rear view of an indicating insert,
FIG. 3 shows a perspective view of several linked indicating inserts fo form a module identifier,
FIG. 4 shows an electric schematic for reading a module identifier,
FIG. 5 shows a table of characters and associated pin patterns for invertible inserts.

Like items are numbered the same on the drawings.

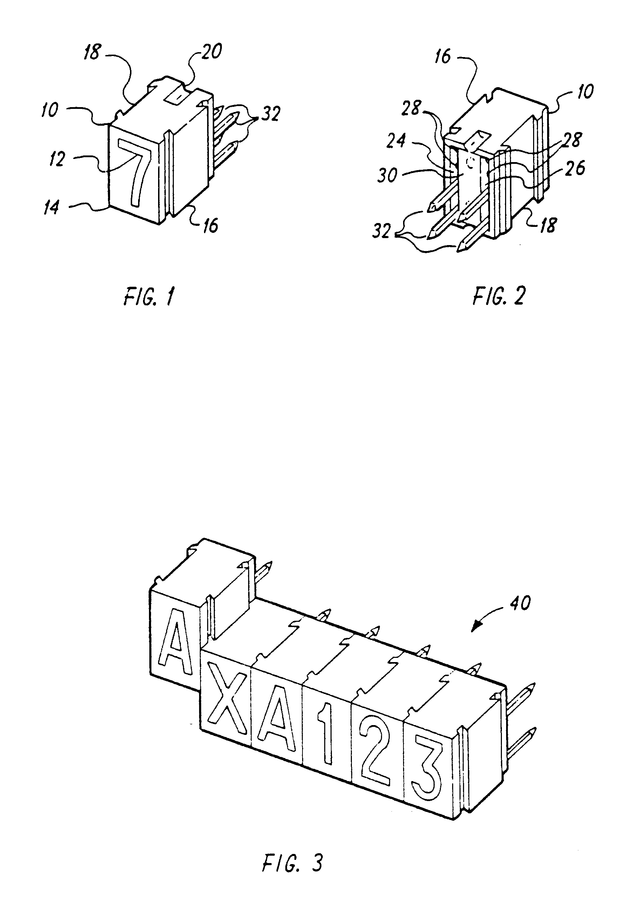

FIG. 1 illustrates an indicating insert. Generally, an indicating insert is a small device with a single character or symbol embossed on the front surface. The rear surface has two or more pins that are electrically connected. The pins are arranged, sized and shaped to be plugged into a socket. Not all the pins are required and according to the presence or absence of pins in particular positions, a pattern is formed corresponding to the particular character or symbol embossed on the front surface.

The preferred form of manufacturing an insert shown in FIG. 1, uses a base 10 of injection molded gray plastic modified polyethylene oxide. A particular visual character 12 is hot stamped on the front surface with an orientation identifier shown as a character underline 14.

A tongue 16 running vertically is formed on one side, and a corresponding groove 18 running vertical is formed on the opposite side. The symmetric tongue 16 and groove 18 portions formed on the sides enable several inserts to be interlocked as a unit FIG. 3. Separate indicating inserts may then be assembled to form module identifier with an identifying word or label across the front face of the module. The underline 14, tongue 16 and groove 18 patterns control proper orientation of individual inserts in the module identifier.

One or more guides may be formed along the insert to orient proper insertion of the module identifier in a socket. Applicants prefer an upper groove 20 of a half cylindrical section extending along the upper surface partially from the rear surface towards the front surface of the insert. When the insert is properly aligned, a socket guide can fit the full extension of the groove. If the insert is incorrectly oriented, the lower surface with no groove encounters the socket guide thereby preventing insertion. Sockets without guides allow both rightside up and upside down insertion of the module identifier.

FIG. 2, shows a perspective rear view of an indicating insert on a rear surface of the base 10, two parallel slots 24, 26 are formed, with four regularly spaced notches 28 formed in each of the outside walls of the slots 24, 26 and extending perpendicular to the rear surface of the base 10. An elongated U-shaped nickle-plated steel shorting strip 30 is fitted in the parallel slots 24, 26 of the base and staked to the rear of the base 10. Particular notches 28 are selected according to a pin code relating the embossed front character 12 to a pin pattern. Brass pins 32 with a tin-lead coating are then pushed into the selected notches 28 and held in place between the shorting strip 30 and the base 10 to form a gas-tight electrical connection with the shorting strip 30.

In an alternative method of manufacture, an indicating insert is made of injection molded nylon. The pins and shorting strip are stamped as one piece of formed brass. Unused pins are removed by shearing to create the designated pin pattern. Nylon is then injected about the shorting strip, and the visual character is hot stamped on the front surface.

In the preferred form, the indicating insert has eight pin positions arranged in two rows and numbered 0 through 7. Each pin position may or may not have a pin in it. All pins are shorted together. Thus each pin pattern can be associated with an array of eight Boolean variables, C0 through C7 where Ci is 1, if the i'th pin position has a pin present, and 0 otherwise. The array is the pin code for the indicating insert.

Numerous other pin support and pin cross connection methods are possible. The pins may be switched on the insert forming a universal insert. The number of pins is not limited to eight, nor is the pin arrangement limited to two parallel sets. The pin pattern may be formed other than by including or excluding pins. Two variations merit mentioning. All pins may be present, but only those forming part of the pin code are electrically linked, as for example by a cover piece with a cross link pattern contacting only the appropriate pins. Also a single cross link pattern is not required. Pins may be arranged in several groups with each group being cross linked, but separate from other cross linked groups. Further while the preferred method develops signal returns by a spatial pattern, a return time pattern method is also possible, for example, the time between the returning signals would correspond to the insert character.

FIG. 3 shows six inserts linked by the tongue 16 and groove 18 structures to form a single module identifier 40 with the label "AXA123" across the module's front. The single module identifier 40 acts as an insertable unit. The individual inserts then act as individual letters allowing meaningful words to be assembled as labels. The label may correspond to a plant location, a module function, or other user selected labeling scheme. Alphanumeric combinations such as "R12345", "water" and "H₂O" may be used, and other symbols may be developed such as a water drop, valve symbol or others.

Modules may be located in an industrial environment in a variety of fashions making proper orientation of the module identifier 40 ambiguous, or difficult to read for a conveniently positioned human. To help resolve these problems, the sockets receiving the inserts or module identifiers may be constructed in two forms. One form allows inversion, and the other prohibits inversion. In the invertible format the pin patterns may be rotated half a turn and still be electically decipherable. The user then does not have to be concerned with orientation of the module identifier.

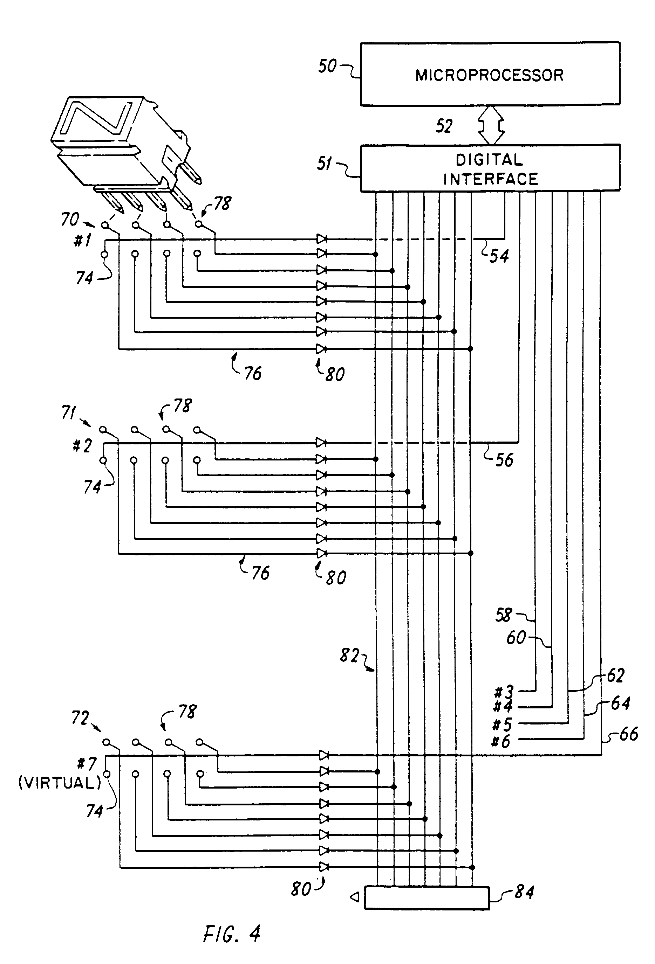

FIG. 4 shows a circuit schematic for reading six inserts assembled as a module identifier 40, and a seventh virtual character. The virtual indicating insert has no socket or physical location, and is encoded on the circuit dielectric within the termination connector. The seventh virtual character may be used to encode the termination connector type.

A microprocessor 50 including software issues read requests along a bus 52 to a digital interface 51. Extending from the digital interface 51 are commons lines 54-66, one each for each of the inserts (two shown, 70, 71) allowed in a module identifier and one for the virtual character 72. Six inserts are thought to form a convenient module identifier, so seven common lines 54-66 are shown. Each common line 54-64 contacts a zero contact 74 position in a socket for each associated insert. Similarly a seventh common line 66 connects to the zero contact 74 point of the virtual character 72. For each insert socket, seven issuing lines 76 return from the remaining seven contact points 78 of each insert socket through diodes 80 to seven response lines 82. Each response line 82 is then joined to one of the contact points 78 in each of the sockets. The seven response lines 82 in one direction return to the digital interface 51, and in the opposite direction extend to resistive loads 84 being controlled by the system. In the preferred embodiment, the microprocessor 50, digital interface 51 and module identifier 40 are located only a short distance apart as parts of a single module; however, it is possible that any or all may be located at great distance from each other.

To read an insert character 70, a test signal is issued on the insert's common line 54 to the zero contact 74. The signal is passed by the shorting strip 30 of the insert 70 to any pins present. Where there are pins present, the signal passes the issuing lines 76 and diodes 80 to the response lines 82. The pattern of the return signals is then determined by the presence or absence of a pin in the insert completing the connection to the socket contact 78 and issuing line 76.

The seven response lines 82 are examined by the microprocessor 50 via the digital interface 51 for returned signals. The insert's pin pattern is compared by the microprocessor 50 with a list held in the microprocessor's memory. When the pin pattern matches one in the list, the associated character is then known. The process of determining the module identifier label occurs similarly. Each insert is examined in sequence to determine the insert's character. As each insert's character is identified the module identifier's label is built.

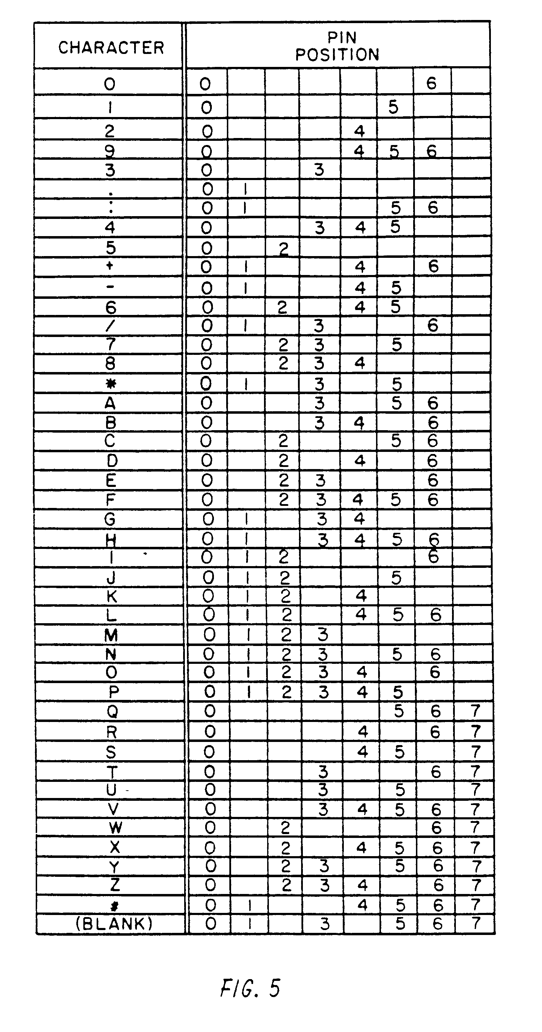

FIG. 5 shows the preferred embodiment of a table of characters and associated pin patterns for invertible inserts. A character is shown in the first column, and a corresponding pin code of eight pin positions is shown spanning the next eight columns. Each of the pin position columns for a character lists either a number when a pin is present in that position, or a blank when no pin is present in that position in the insert. In the preferred embodiment, each pin code has a common pin position used for test signal input. The codes of FIG 5 show the common pin in position zero corresponding to the zero contact 74. Pin codes are chosen to have an even number of pins (2, 4, 6, or 8) so each code has even parity. One bit errors caused by pin contact failure are then detectable. Pin codes are otherwise chosen so for each distinguishable symbol is associated with a distinguishable pin pattern. The problem of recognizing which indicating insert is present is then to determine which pin positions have pins present.

Indicating inserts when used in sockets with socket guides can be oriented in only one way. Since upside down characters are prohibited mechanically, there can be only one meaning for a detected pin pattern. The number of available patterns exceeds the number of letters and digits, so there are additional codes that can be used for special characters. Special symbols may include greek, mathematical, chemical, or similar typographic characters; or may be pictorial or hieroglyphic characters for example a circuit switch schematic, or a water faucet icon.

FIG. 5 shows applicants' preferred table of codes for noninvertible module identifiers for the characters including the alphabet, the digits and nine other symbols.

The procedure for reading the indicating inserts of a module identifier is simple. There is always a pin in socket contact 0. Only the contact voltages at pins 1 through 7 are read with contact 0 held high. The procedure is to read a 7 bit array, Q[1] . . . Q[7]. The array Q is effectively the same as the P0 array in the invertible module case. Q[0] is defined to be 1. Next, a table of codes is scanned for Q and returns a character LETTER plus a Boolean flag FOUND. If FOUND is false, an error is reported.

To facilitate the electrical decoding of the invertable indicating inserts, the common pins 0 and 7 are placed at diagonal corners of the pinout, making the common positions invariant with inversion. This shortens the list of available pin codes for character definition. Since in the preferred embodiment symmetrical pin configurations are not used, inversion of an indicating insert causes the pin pattern to be transposed, yielding a different electrically readable code. Consequently, each invertible indicating insert is assigned a pair of codes.

The method reading invertible module identifiers is then to gather the pin pattern as before, and then search a list of pin codes for rightside up characters, and then search a list of pin codes for upside down characters. The rightside up and upside down characters pin code lists are constructed so the two do not include the same pin codes.

While there have been shown and described what are at present considered to be the preferred embodiments of the invention, it will be apparent to those skilled in the art that various changes and modifications can be made herein without departing from the scope of the invention defined by the appended claims, for example though most easily understood in terms of identifiying a communications line, an indicating insert is useable generally at any identifiable connection point having several signal path connections for either issuing signals to or receiving signals from a test point.

Another method of solving the ambiguity of inversion, though not preferred by applicants, is to establish a rule that each label include a orientation character. The orientation characters, which use nonsymetrical codes, could include among others A, B, C, D, E, F, G, J, K, P, R, T, U, V, and Y. A label composed of only X's and O's would then be disallowed. During software examination of the label, the nonsynetrical character is sought to determine the label's overall orientation. If no orientation character is found, an error is generated.

Module identifiers can serve other functions besides mere labeling. The function of the device may be called into action by the choice of a particular identifier. For example, industrial controllers commonly use proportional (P), integral (I), and derivative (D) functions in various combinations to control a process. Such a PID controller operating on a water line might then be labeled PIDH2O to produce all three functions. By replacing the I and D inserts with blank inserts, the label reads P__H2O. A controller designed to look to the first three label characters for function definition is then altered to function as a proportional (P) only controller. Other function switching may occur by associating an available function with a particular insert character either present in the label, or present in a particular label position. Methods for initiating or inhibiting available choices in a device by reading a character input are thought to be within the skill in the art.

## Claims

1. A system of unique identity elements ford external electrical determination of an object, comprising a plurality of physically joined unique identity articles in combination to form a unique identity label, each of which identity articles comprising:
(a) a body having a plurality of surfaces forming top, bottom, and side faces, including a first surface having thereon at least one visible identifying symbol (12), a second surface having a plurality of electrical connection pins (32), and substantially parallel third and fourth surfaces;
(b) an electrical input channel adapted to receive an electrical identity request signal and comprising at least one and less than all of said connection pins (32),
(c) an electrical output channel comprising the remainder of said connection pins (32), and
(d) electrical connections (30) between the electrical input channel and the electrical output channel.

2. The system as in claim 1, wherein said third and said fourth surfaces are each formed by at least one corresponding interlock surface area (16, 18).

3. The system as in claim 1 or 2, wherein said visible identifying symbol (12) is distinguishable in a normal position and in an inverted position.

4. The system as in any one of claims 1 to 3, wherein said visible identifying symbol (12) further includes a visually distinguishable orientation symbol (14).

5. The system as in any one of claims 1 to 4, wherein said electrical connections (30) between the electrical input channel and the electrical output channel form a unique pattern and said first surface visible identifying symbol (12) corresponds to said unique pattern, to provide an unique electrical output.

6. The system as in claim 2, wherein said third and fourth surfaces (16, 18) are separable from adjoining identity articles.

7. The system as in any one of claims 1 to 6, wherein said connection pins are connectable to a socket connector.

8. The system as in claim 1, further including an interface unit (51) and a processing unit (50), wherein said interface unit includes means for (i) issuing at least one test signal to said input channel, and for (ii) receiving at least one request signal and at least one response signal via said output channel; and wherein said processing unit includes means for (i) issuing said request signal to said interface unit for controlling the issuance of at least one test signal by the interface unit, for (ii) decoding the response signal, and for (iii) issuing an identification output signal.

9. The system as in claims 8, wherein said third and said fourth surfaces are each formed by at least one corresponding interlock surface area (16, 18), and said plurality of unique identity articles are joined by said interlock surface areas (16, 18).

10. The system as in claim 9, wherein said interlock surfaces (16, 18) of each identity article are separable from adjoining identity articles.

11. A method of determining the unique identity assigned to the object in the system of any one of claims 1 to 10, with an apparatus including an electrical input channel (54) adapted to receive a signal, an electrical output channel (78), means (40) for modifying an electrical identity request signal and for providing a unique identity electrical output via electrical connections between the electrical input channel and the electrical output channel, which comprises the steps of:
a) communicating at least one discrete signal voltage on said input channel as an electrical identity request signal;
b) converting the electrical identity request signal to a unique identity electrical output signal by modifying the electrical identity request signal in an identifier article having permanent electrical connections between the electrical input channel and the electrical output channel to provide a unique identity electrical output; and
c) communicating said unique identity electrical output externally via the electrical output channel.

12. The method as in claim 11 , wherein said at least one discrete signal voltage is a substantially direct current voltage.

13. The method as in claim 11 or 12, wherein said apparatus further include an interface unit (51) and a processing unit (50), comprising the steps of:
a) in said interface unit (51), i) issuing at least one test signal to said input channel, and ii) receiving at least one request signal and at least one response signal via said output channel, and
b) in said processing unit (50), i) issuing said request signal to said interface unit (51) for controlling the issuance of at least one test signal by the interface unit (51), ii) decoding the response signal, and iii) issuing an identification output signal related to the object or location.

## Patentansprüche

1. System von eindeutigen Identitätselementen zum externen elektrischen Bestimmen eines Objekts mit einer Vielzahl von physikalisch verbundenen eindeutigen Identitätsartikeln in Kombination, um eine eindeutige Identitätsmarke zu bilden, wobei jeder der Identitätsartikel umfaßt:
(a) einen Körper mit einer Vielzahl von Oberflächen, die eine Oberseite, einen Boden und Seitenflächen bilden, wobei diese eine erste Oberfläche, die darauf mindestens ein sichtbares Identifizierungssymbol (12) besitzt, eine zweite Oberfläche, die eine Vielzahl elektronischer Verbindungspins (32) und im wesentlichen parallele dritte und vierte Oberflächen beinhalten;
(b) einen elektrischen Eingangskanal, der daran angepaßt ist, ein elektrisches Identitätsanfragesignal zu empfangen, und mindestens einen und weniger als alle der Verbindungspins (32) umfaßt,
(c) einen elektrischen Ausgangskanal mit dem Rest der Verbindungspins (32), und
(d) elektrische Verbindungen (30) zwischen dem elektrischen Eingangskanal und dem elektrischen Ausgangskanal.

2. System nach Anspruch 1, bei dem die dritte und vierte Oberfläche jeweils durch mindestens einen entsprechenden Verriegelungsoberflächenflächenbereich (16, 18) gebildet sind.

3. System nach Anspruch 1 oder 2, bei dem das sichtbare Identifizierungssymbol (12) in eine Normalposition und in eine invertierte Position unterscheidbar ist.

4. System nach irgendeinem der Ansprüche 1 bis 3, bei dem das sichtbare Identifizierungssymbol (12) ferner ein sichtbar unterscheidbares Orientierungssymbol (14) beinhaltet.

5. System nach irgendeinem der Ansprüche 1 bis 4, bei dem die elektrischen Verbindungen (30) zwischen dem elektrischen Eingangskanal und dem elektrischen Ausgangskanal ein eindeutiges Muster bilden und bei dem das erste oberflächensichtbare Identifizierungssymbol (12) dem eindeutigen Muster entspricht, um ein eindeutiges elektrisches Ausgangssignal bereitzustellen.

6. System nach Anspruch 2, bei dem die dritte und die vierte Oberfläche (16, 18) von angrenzenden Identitätsartikeln trennbar sind.

7. System nach irgendeinem der Ansprüche 1 bis 6, bei dem die Verbindungspins mit einem Fassungssteckverbinder verbunden werden können.

8. System nach Anspruch 1 mit ferner einer Schnittstelleneinheit (51) und einer Verarbeitungseinheit (50), bei dem die Schnittstelleneinheit eine Einrichtung zum (i) Ausgeben von mindestens einem Testsignal an den Eingangskanal und zum (ii) Empfangen von mindestens einem Anfragesignal und mindestens einem Antwortsignal über den Ausgangskanal beinhaltet; und bei dem die Verarbeitungseinheit eine Einrichtung zum (i) Ausgeben des Anfragesignals an die Schnittstelleneinheit zum Steuern der Ausgabe von mindestens einem Testsignal durch die Schnittstelleneinheit, zum (ii) Decodieren des Antwortsignals und zum (iii) Ausgeben eines Identifikationsausgangssignals beinhaltet.

9. System nach Anspruch 8, bei dem die dritte und vierte Oberfläche jeweils durch mindestens einen entsprechenden Verriegelungsoberflächenflächenbereich (16, 18) gebildet sind und bei dem die Vielzahl eindeutiger Identitätsartikel durch die Verriegelungsoberflächenflächenbereiche (16, 18) verbunden sind.

10. System nach Anspruch 9, bei dem die Verriegelungsoberflächen (16, 18) jedes Identitätsartikels von den angrenzenden Identitätsartikeln trennbar sind.

11. Verfahren zum Bestimmen der eindeutigen Identität, die dem Objekt in dem System entsprechend irgendeinem der Ansprüche 1 bis 10 zugewiesen ist, mit einer Vorrichtung mit einem elektrischen Eingangskanal (54), der daran angepaßt ist, ein Signal zu empfangen, einem elektrischen Ausgangssignal (78), einer Einrichtung (40) zum Modifizieren eines elektrischen Identitätsanfragesignals und zum Bereitstellen eines eindeutigen elektrischen Identitätsausgangssignals über elektrische Verbindungen zwischen dem elektrischen Eingangskanal und dem elektrischen Ausgangskanal, welches folgende Schritte umfaßt:
a) Mitteilen von mindestens einer diskreten Signalspannung auf dem Eingangskanal als ein elektrisches Identitätsanfragesignal;
b) Umsetzen des elektrischen Identitätsanfragesignals in ein eindeutiges elektrisches Identitätsausgangssignal durch das Modifizieren des elektrischen Identitätsanfragesignals in einen Bezeichnerartikel, der permanente elektrische Verbindungen zwischen dem elektrischen Eingangskanal und dem elektrischen Ausgangskanal besitzt, um ein eindeutiges elektrisches Identitätsausgangssignal bereitzustellen; und
c) Mitteilen des eindeutigen elektrischen Identitätsausgangssignals auf externe Weise über den elektrischen Ausgangskanal.

12. Verfahren nach Anspruch 11, bei dem wenigstens eine diskrete Signalspannung eine im wesentlichen direkte Stromspannung ist.

13. Verfahren nach Anspruch 11 oder 12, bei dem die Vorrichtung ferner eine Oberflächeneinheit (51) und eine Verarbeitungseinheit (50) umfaßt, mit den Schritten:
a) in der Schnittstelleneinheit (51): i) Ausgeben von mindestens einem Testsignal an den Eingangskanal, und ii) Empfangen von mindestens einem Anfragesignal und mindestens einem Antwortsignal über den Ausgangskanal, und
b) in der Verarbeitungseinheit (50): i) Ausgeben des Anfragesignals an die Schnittstelleneinheit (51) zum Steuern der Ausgabe von mindestens einem Testsignal durch die Schnittstelleneinheit (51), ii) Decodieren des Antwortsignals und iii) Ausgeben eines Identifationsausgangssignals, das auf das Objekt oder den Ort bezogen ist.

## Revendications

1. Système d'éléments à identité unique pour détermination électrique externe d'un objet, comprenant plusieurs articles d'identité unique matériellement réunis en une combinaison afin de former une étiquette d'identification unique, chacun des articles d'identité comprenant :
(a) un corps possédant plusieurs surfaces qui forment des faces de dessus, de dessous et de côté, comportant une première surface qui porte au moins un symbole d'identification visible (12), une deuxième surface qui possède plusieurs broches de connexion électrique (32) et des troisième et quatrième surfaces sensiblement parallèles ;
(b) un canal d'entrée électrique destiné à recevoir un signal électrique de demande d'identité et comprenant au moins une dite broche de connexion et, en tout cas, moins que toutes lesdites broches de connexion (32),
(c) un canal de sortie électrique comprenant le reste desdites broches de connexion (32), et
(d) des connexions électriques (30) formées entre le canal d'entrée électrique et le canal de sortie électrique.

2. Système selon la revendication 1, où lesdites troisième et quatrième surfaces sont chacune constituées d'au moins une zone formant une surface d'interverrouillage correspondante (16, 18).

3. Système selon la revendication 1 ou 2, où ledit symbole d'identification visible (12) peut être distingué en position normale et en position retournée.

4. Système selon l'une quelconque des revendications 1 à 3, où ledit symbole d'identification visible (12) comporte en outre un symbole d'orientation pouvant être distingué visuellement (14).

5. Système selon l'une quelconque des revendications 1 à 4, où lesdites connexions électriques (30) formées entre le canal d'entrée électrique et le canal de sortie électrique forment une configuration unique, le symbole d'identification visible (12) de ladite première surface correspondant à ladite configuration unique, de manière à délivrer un signal de sortie électrique unique.

6. Système selon la revendication 2, où lesdites troisième et quatrième surfaces (16, 18) peuvent être séparées vis-à-vis d'articles d'identité adjacents.

7. Système selon l'une quelconque des revendications 1 à 6, où lesdites broches de connexion peuvent être connectées à un socle de connecteur.

8. Système selon la revendication 1, comportant en outre une unité d'interface (51) et une unité de traitement (50), où ladite unité d'interface comporte un moyen permettant (i) de délivrer au moins un signal de test audit canal d'entrée et (ii) de recevoir au moins un signal de demande et au moins un signal de réponse via ledit canal de sortie, et où ladite unité de traitement comporte un moyen permettant (i) de délivrer ledit signal de demande à ladite unité d'interface afin de commander la délivrance d'au moins un signal de test par l'unité d'interface, (ii) de décoder le signal de réponse, et (iii) de délivrer un signal de sortie d'identification.

9. Système selon la revendication 8, où lesdites troisième et quatrième surfaces sont chacune constituées par au moins une zone formant une surface d'interverrouillage correspondante (16, 18), et lesdits articles d'identité unique sont réunis par lesdites zones formant des surfaces d'interverrouillage (16, 18).

10. Système selon la revendication 9, où lesdites surfaces d'interverrouillage (16, 18) de chaque article d'identité peuvent être séparées vis-à-vis d'articles d'identité adjacents.

11. Procédé de détermination de l'identité unique attribuée à l'objet dans le système de l'une quelconque des revendications 1 à 10, à l'aide d'un appareil comportant un canal d'entrée électrique (54) destiné à recevoir un signal, un canal de sortie électrique (78), un moyen (40) servant à modifier un signal électrique de demande d'identité et à produire un signal de sortie électrique d'identité unique via des connexions électriques formées entre le canal d'entrée électrique et le canal de sortie électrique, le procédé comprenant les opérations suivantes :
a) transmettre au moins une tension de signal discrète sur ledit canal d'entrée au titre d'un signal électrique de demande d'identité ;
b) transformer le signal électrique de demande d'identité en un signal de sortie électrique d'identité unique en modifiant le signal électrique de demande d'identité dans un article identificateur ayant des connexions électriques permanentes entre le canal d'entrée électrique et le canal de sortie électrique afin de produire un signal de sortie électrique d'identité unique ; et
c) transmettre ledit signal de sortie électrique d'identité unique à l'extérieur via le canal de sortie électrique.

12. Procédé selon la revendication 11, où ladite tension de signal discrète (ou lesdites tensions, s'il y en a plusieurs) est une tension sensiblement continue.

13. Procédé selon la revendication 11 ou 12, où ledit appareil comporte en outre une unité d'interface (51) et une unité de traitement (50), le procédé comprenant les opérations suivantes :
a) dans ladite unité d'interface (51), i) délivrer au moins un signal de test audit canal d'entrée et ii) recevoir au moins un signal de demande et au moins un signal de réponse via ledit canal de sortie, et
b) dans ladite unité de traitement (50), i) délivrer ledit signal de demande à ladite unité d'interface (51) afin de commander la délivrance d'au moins un signal de test par l'unité d'interface (51), ii) décoder le signal de réponse, et iii) délivrer un signal de sortie d'identification associé à l'objet ou à l'emplacement.
